# EUROPÄISCHE PATENTSCHRIFT

(11) **EP 2 007 615 B1**
(45) Veröffentlichungstag und Bekanntmachung des Hinweises auf die Patenterteilung: **13.03.2013**
(21) Anmeldenummer: 07702424.8
(22) Anmeldetag: 31.01.2007
(51) Int. Cl.: B62D 35/00

(54) **LUFTLEITEINRICHTUNG FÜR EIN FAHRZEUG**
AIR GUIDING DEVICE FOR A VEHICLE
DISPOSITIF DE GUIDAGE D'AIR POUR UN VEHICULE

(30) Priorität: 27.02.2006 DE 102006009048
(43) Veröffentlichungstag der Anmeldung: 31.12.2008
(73) Patentinhaber: HS Genion GmbH, 86899 Landsberg am Lech (DE)
(72) Erfinder: WEGENER, Fritz, 82205 Gilching (DE)
(74) Vertreter: Grünberg, Thomas
(86) Internationale Anmeldenummer: PCT/DE2007/000194
(87) Internationale Veröffentlichungsnummer: WO 2007/095886

(56) Entgegenhaltungen:
- EP-A- 1 031 497
- DE-A1- 4 305 090
- FR-A1- 2 867 442

## Beschreibung

Die Erfindung betrifft eine Luftleiteinrichtung für ein Fahrzeug nach dem Oberbegriff des Patentanspruchs 1.

Eine derartige Luftleiteinrichtung ist beispielsweise aus der DE 103 48 284 A1 bekannt und umfasst zum Verstellen eines Spoilerblatts einen Antriebsmotor, der über ein Untersetzungsgetriebe mit einem Spindeltrieb verbunden ist. Der Spindeltrieb ist derart ausgebildet, dass eine in axialer Richtung fixierte und drehbar gelagerte Spindelmutter mittels einer Antriebswelle angetrieben wird, welche mit dem Untersetzungsgetriebe in Verbindung steht, so dass eine drehfest gelagerte Spindel bei Betätigung des Elektromotors einen axialen Versatz erfährt. Durch den axialen Versatz der Spindel erfährt ein mit der Spindel verbundenes Spoilerelement einen linearen Versatz gegenüber der Fahrzeugkarosserie, so dass es entweder zur Nutzung als Luftleiteinrichtung ausgefahren oder in seine Ruhestellung eingefahren werden kann. Der Aufbau dieser Vorrichtung ist sehr aufwendig. Zudem wird durch die aus der DE 103 48 284 A1 bekannte Vorrichtung keine Schwenkbewegung des Spoilerelementes ausgelöst, was jedoch häufig erwünscht ist.

Aus der DE 103 09 369 A1 ist ein Antrieb für eine ausfahrbare Luftleiteinrichtung mit einem Spoilerelement bekannt, welche über einen Mehrgelenkmechanismus, der mehrere Schwenklenker umfasst, zwischen einer mit der Fahrzeugkarosserie fluchtenden Ruhestellung und einer ausgestellten Betriebsstellung verstellbar ist. Die Betriebsstellung und die Ruhestellung sind jeweils mittels eines Anschlags definiert und gesichert. Da der Antrieb nicht selbsthemmend ausgelegt ist, kann das Spoilerelement keine gesicherte Zwischenstellung zwischen der Ruhestellung und der Betriebsstellung einnehmen.

Der Erfindung liegt die Aufgabe zugrunde, eine gemäß der einleitend genannten Gattung ausgebildete Luftleiteinrichtung zu schaffen, welche in einfacher Weise selbsthemmend ausgebildet werden kann und mithin gesicherte Zwischenstellungen des Spoilerelements zwischen einer Ruhestellung und einer maximal ausgefahrenen Stellung des Spoilerelements zulässt.

Diese Aufgabe ist erfindungsgemäß durch die Luftleiteinrichtung mit den Merkmalen des Patentanspruchs 1 gelöst.

Der Kern der Erfindung liegt mithin darin, einen Stellantrieb für eine Kraftfahrzeugluftleiteinrichtung mit einer axial fixierten und drehbar gelagerten Gewindespindel wie in der FR 2 867 442 A1 auszubilden, die mittels des Elektromotors angetrieben ist und mit einer Spindelmutter zusammenwirkt, die bei einer Drehung der Gewindespindel axial versetzt wird und somit über den schwenkbar gelagerten Kopplungslenker eine Stellkraft auf die Ausstellsteuereinrichtung überträgt. Durch geeignete Wahl der Steigung des Gewindes der Gewindespindel, d.h. vorzugsweise durch eine sehr kleine Steigung des Spindelgewindes, kann unter Berücksichtigung der für die Gewindespindeloberfläche und die Spindelmutter eingesetzten Werkstoffe eine Selbsthemmung des Antriebs für die Luftleiteinrichtung in einfacher Weise realisiert werden.

Die Luftleiteinrichtung, die mittels des Stellantriebs nach der Erfindung aus- bzw. eingefahren werden kann, kann insbesondere als so genannter Heckspoiler ausgebildet sein, der heckseitig eines Fahrzeugheckfensters in eine Fahrzeugkarosserie integriert ist. Insbesondere in diesem Fall umfasst der Stellantrieb im Bereich der seitlichen Enden des sich in Fahrzeugquerrichtung erstreckenden Heckspoilers jeweils eine drehbar gelagerte und motorisch angetriebene Gewindespindel, die mit einer bezüglich des Fahrzeugaufbaus drehfesten Spindelmutter zusammenwirkt, deren axialer Versatz auf der Gewindespindel bei Betätigung des Antriebsmotors über einen Kopplungslenker eine Kraft auf eine Ausstellsteuereinrichtung ausübt und so den Heckspoiler verstellt.

Die selbsthemmende Ausbildung des Stellantriebs gewährleistet, dass die Luftleiteinrichtung zwischen ihrer Ruhestellung und ihrer maximal ausgefahrenen Stellung beliebige Positionen einnehmen kann, ohne dass ein auf die Luftleiteinrichtung wirkender, durch anströmende Luft ausgeübter Druck zu einem Einfahren der Luftleiteinrichtung führen würde. Eine Verstellung des Spoilerelements erfolgt nur bei einer Betätigung des Antriebsmotors, der in der Regel mit einer geeigneten Steuereinrichtung verbunden ist. Die Ausstellposition der Luftleiteinrichtung kann entweder vom Fahrer des betreffenden Fahrzeugs vorgegeben werden oder in Abhängigkeit von der gewählten Fahrgeschwindigkeit ausgelöst durch eine mit einem Geschwindigkeitsmesser gekoppelten Steuerelektronik erfolgen.

Bei einer bevorzugten Ausführungsform der Luftleiteinrichtung nach der Erfindung umfasst die Ausstellsteuereinrichtung eine Mehrgelenklenkereinheit, insbesondere eine Viergelenklenkereinheit. Wie üblich, umfasst eine Viergelenklenkereinheit zwei Lenker. Diese sind jeweils einerseits karosseriefest angelenkt, und andererseits an das Spoilerelement, insbesondere einen Träger des Spoilerelements angelenkt. Durch entsprechende Wahl der Lenkerlängen kann die gewünschte Bewegungsbahn des Spoilerelements bei dessen Verstellen vorgegeben werden.

Bei einer alternativen Ausführungsform der Luftleiteinrichtung nach der Erfindung umfasst die Ausstellsteuereinrichtung einen an einer karosseriefesten Kulissenbahn geführten Träger für das Spoilerelement. Der Kopplungslenker ist in diesem Falle mit dem Träger verbunden und übt somit bei Betätigung des Antriebsmotors für die Gewindespindel eine Stellkraft auf den Träger aus. Denkbar ist es natürlich auch, an dem Träger des Spoilerelements eine Kulissenbahn vorzusehen, die an einem karosseriefesten Gleitelement geführt ist. Der Kopplungslenker, der an der Spindelmutter angelenkt ist, ist dann ebenfalls mit dem Träger für das Spoilerelement verbunden.

Um die Selbsthemmung des Stellantriebs nach der Erfindung weiter zu erhöhen, umfasst eine bevorzugte Ausfizhrungsform der Luftleiteinrichtung nach der Erfindung einen Schneckentrieb, über den die Gewindespindel mit einer Antriebswelle des Antriebsmotors verbunden ist. Der Schneckentrieb kann einerseits das von dem Antriebsmotor ausgeübte Drehmoment von einer Antriebswelle auf die Gewindespindel umlenken. Andererseits kann der Schneckentrieb dazu genutzt werden, das Drehmoment und die Drehzahl des Motors an die im speziellen Anwendungsfall geforderte Ausstellzeit für das Spoilerelement und die zum Ausstellen des Spoilerelements erforderliche Kraft anzupassen. Letztere hängt insbesondere von den jeweiligen aerodynamischen Verhältnissen und der Masse des eingesetzten Spoilerelements ab.

Bei einer alternativen Ausführungsform der Luftleiteinrichtung nach der Erfindung kann die Gewindespindel über einen Antriebsriemen mit dem Antriebsmotor verbunden sein. Das Übersetzungsverhältnis zwischen dem Antriebsmotor und der Gewindespindel kann dann über entsprechende Wahl der an dem Antriebsmotor und der Gewindespindel vorzusehenden Riemenscheiben vorgegeben werden.

Des Weiteren ist es denkbar, dass die Gewindespindel direkt von dem Antriebsmotor angetrieben wird. Im Falle eines Heckspoilers mit beidseitiger Abstützung umfasst der Heckspoiler dann beidseits jeweils eine Gewindespindel, die jeweils durch einen separaten Antriebsmotor antreibbar ist.

Um zu gewährleisten, dass von der Spindelmutter kein Kippmoment auf die Ausstellsteuereinrichtung und damit gegebenenfalls auf das Spoilerelement übertragen wird, ist die Spindelmutter vorzugsweise mit einer Drehmomentabstützung versehen, die vorzugsweise einen Vorsprung umfasst, der in einer karosseriefesten Nut geführt ist. Die Nut ist beispielsweise an einem Gehäuse des Stellantriebs ausgebildet.

Um eine Stellantriebsteuerung zuverlässig initialisieren zu können, umfasst die Gewindespindel mindestens einen Endanschlag, vorzugsweise zwei Endanschläge für die Spindelmutter. Um zu gewährleisten, dass der Antriebsmotor die Spindelmutter von dem jeweiligen Endanschlag wieder lösen kann, ist dieser vorzugsweise aus einem bezüglich der Spindelachse radial abstehenden Stift gebildet, der mit einer beispielsweise parallel zur Spindelachse ausgerichteten Anschlagfläche der Spindelmutter zusammenwirkt. Die Anschlagfläche ist vorzugsweise aus einem bezüglich der Spindelachse radial abstehenden Stift gebildet, der mit einer beispielsweise parallel zur Spindelachse ausgerichteten Anschlagfläche der Spindelmutter zusammenwirkt. Die Anschlagfläche der Spindelmutter kann beispielsweise aber auch von einer torusartigen Stirnfläche der Mutter oder dergleichen gebildet sein, die einen im Wesentlichen punktförmigen Anschlag zwischen dem vorzugsweise zylindrischen Stift und der Spindelmutter gewährleistet.

Um Toleranzen zwischen der Einbaulage des Antriebsmotors und dem Schneckentrieb oder Kegeltrieb zur Übertragung des Drehmomentes von der Antriebswelle auf die Gewindespindel ausgleichen zu können, ist es vorteilhaft, wenn die Antriebswelle als flexible Welle ausgebildet ist.

Um einen präzise Positionierung des Spoilerelementes gewährleisten zu können, ist der Antriebsmotor vorzugsweise mit einer Hallsensorik verbunden.

Weitere vorteilhafte Ausgestaltungen des Gegenstandes nach der Erfindung sind der Beschreibung, der Zeichnung und den Patentansprüchen entnehmbar.

Zwei Ausführungsbeispiele einer Luftleiteinrichtung nach der Erfindung sind in der Zeichnung schematisch vereinfacht dargestellt und werden in der nachfolgenden Beschreibung näher erläutert. Es zeigt:
- Fig. 1: eine perspektivische Ansicht eines Aufbaus einer Luftlenkeinrichtung zur Anordnung im Heckbereich eines Kraftfahrzeuges mit einem Spoilerelement in Ruhestellung;
- Fig. 2: eine Fig. 1 entsprechende Ansicht, jedoch bei ausgestelltem Spoilerelement;
- Fig. 3: eine perspektivische Außenansicht eines Stellantriebs der Luftlenkeinrichtung nach Fig. 1 für ein maximal ausgestelltes Spoilerelement;
- Fig. 4: eine Außenansicht des Stellantriebs für eines ersten Zwischenstellung des Spoilerelements;
- Fig. 5: eine Fig. 4 entsprechende Ansicht für eines zweite Zwischenstellung des Spoilerelements;
- Fig. 6: eine Fig. 4 entsprechende Ansicht des Stellantriebs für ein Spoilerelement in Ruhestellung;
- Fig. 7: eine perspektivische Innenansicht des Stellantriebs für ein vollständig ausgestelltes Spoilerelement;
- Fig. 8: eine Fig. 7 entsprechende Ansicht des Stellantriebs für ein Spoilerelement in Ruhestellung;
- Fig. 9: das Zusammenwirken eines Anschlags einer Gewindespindel des Stellantriebs mit einer Spindelmutter; und
- Fig. 10: eine perspektivische Ansicht einer zweiten Ausführungsform einer Luftleiteinrichtung nach der Erfindung.

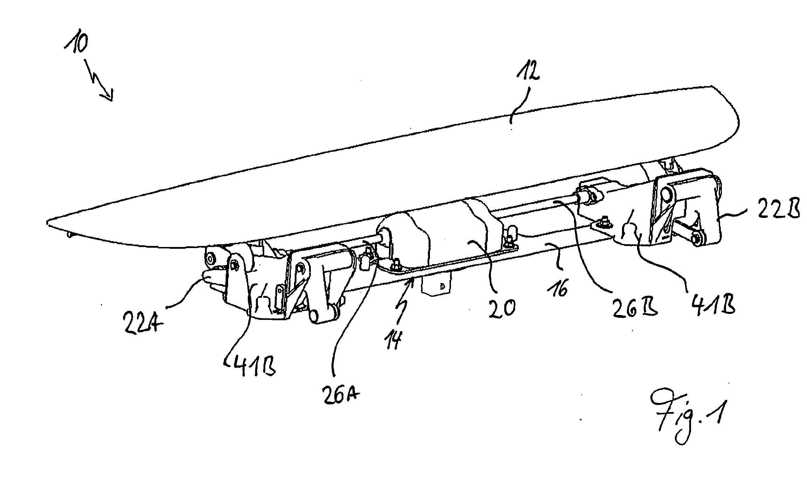

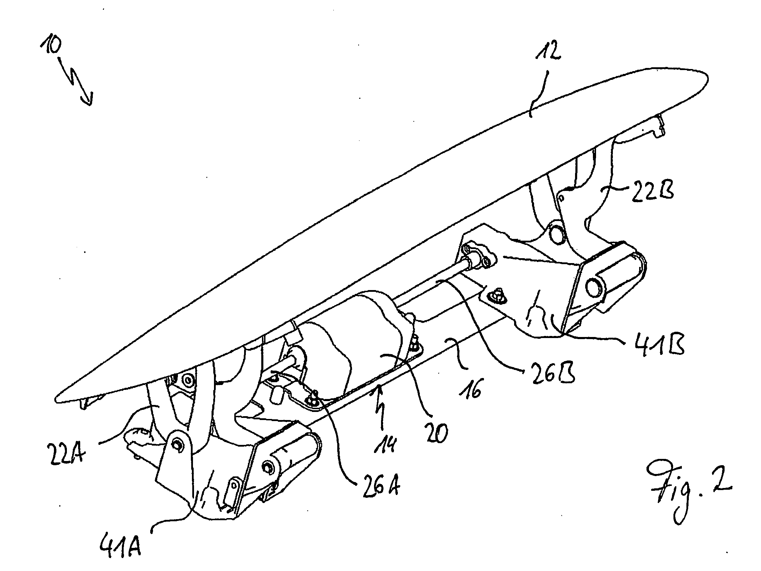

In den Figuren 1 und 2 ist eine Luftleiteinrichtung 10 dargestellt, die im Heckbereich eines hier nicht näher dargestellten Kraftfahrzeuges unterhalb einer Heckscheibe angeordnet werden kann und zur Verbesserung der Straßenlage des betreffenden Kraftfahrzeuges geschwindigkeitsabhängig in verschiedene Ausstellpositionen verfahren werden kann. Alternativ oder zusätzlich kann eine gemäß der Erfindung ausgebildete Luftleiteinrichtung auch in anderen Bereichen eines Kraftfahrzeuges, beispielsweise oberhalb einer Heckscheibe oder auch im Frontbereich angeordnet werden.

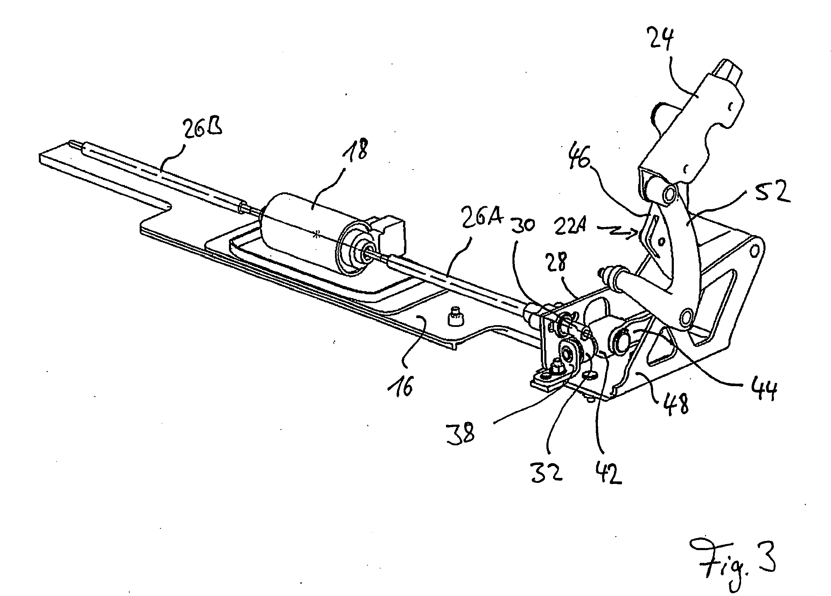

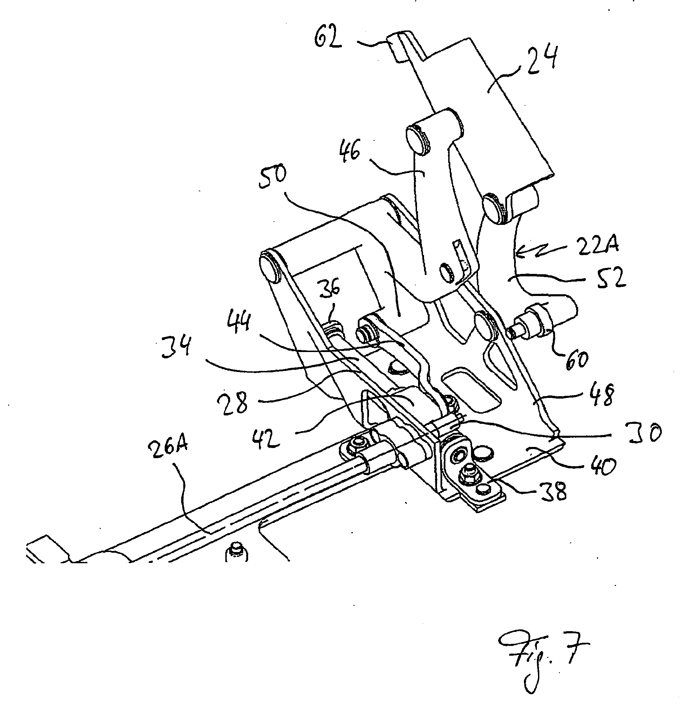

Die Luftleiteinrichtung 10, die wie üblich als Modul in einer korrespondierenden Aussparung des Kraftfahrzeuges montiert werden kann, umfasst ein Spoilerblatt bzw. -element 12, das mittels eines insbesondere in den Figuren 3 bis 9 dargestellten Stellantriebs 14 zwischen einer in Fig. 1 dargestellten Ruhestellung und verschiedenen Aktivierungsstellungen verstellbar ist, von denen in Fig. 2 die maximale Ausstellposition dargestellt ist.

Der Stellantrieb 14 umfasst eine Basisplatte 16, die sich in Fahrzeugquerrichtung erstreckt und in deren Mitte ein Antriebsmotor 18 angeordnet ist, der von einem Motorgehäuse 20 aufgenommen ist, welches mit der Basisplatte 16 verschraubt ist.

Der Antriebsmotor 18 dient zur Betätigung von beidseits mit dem Spoilerelement 12 verbundenen, jeweils eine Ausstellsteuereinrichtung bildenden Viergelenklenkereinheiten 22A und 22B, die jeweils mit einem Träger 24 versehen sind, an dem das Spoilerelement 12 befestigt ist. Zur Betätigung der Viergelenklenkereinheiten 22A, 22B ist der Antriebsmotor 18 mit zwei sich jeweils in Fahrzeugquerrichtung erstreckenden Antriebswellen 26A, 26B verbunden, die jeweils als flexible Welle ausgebildet sind und im Bereich einer Seitenwand 28 einer Scharnierkonsole 48 zur Ausbildung eines Schneckentriebs mit einer Schneckenwelle 30 versehen sind, die mit einem Schneckenrad 32 zusammenwirkt.

Das Schneckenrad 32 ist drehfest mit einer Gewindespindel 34 verbunden, die in axialer Richtung fixiert ist und an Lagerlaschen 36 und 38 drehbar gelagert ist, welche an einer Grundplatte 40 der Scharnierkonsole 48 verschraubt sind.

Auf der Gewindespindel 34 sitzt eine Spindelmutter 42, die bei einer Betätigung der Spindel 34 mittels des Antriebsmotors 18 auf der Gewindespindel 34 in derer axialer Richtung verfahren wird und an der ein Kopplungslenker 44 schwenkbar angelenkt ist, der mit seinem der Spindelmutter 42 abgewandten Ende schwenkbar an einem in Fahrtrichtung hinteren Lenker 46 der betreffenden Viergelenklenkereinheit 22A bzw. 22B angelenkt ist. Zum Anlenken des Kopplungslenkers 44 weist der winklig ausgebildete hintere Lenker 46 einen Kopplungsarm 50 auf. Der hintere Lenker 46 ist einerseits an den Seitenwänden der Scharnierkonsole 48 und andererseits an dem Träger 34 für das Spoilerelement 12 drehbar gelagert. Des Weiteren weist die Viergelenklenkereinheit 22A bzw. 22B einen in Fahrtrichtung vorderen Lenker 52 auf, der einerseits an einer Seitenwand der Scharnierkonsole 48 und andererseits an dem Träger 24 für das Spoilerelement 12 gelagert ist.

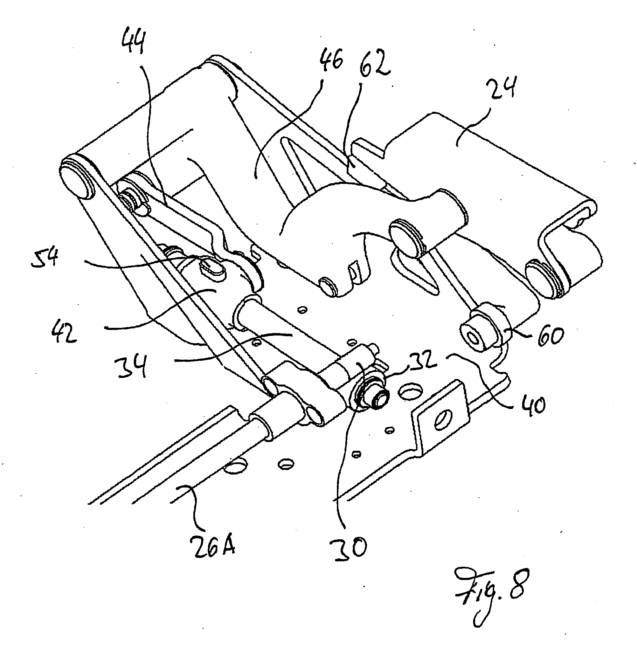

Wie insbesondere Fig. 8 zu entnehmen ist, weist die Spindelmutter an ihrer Oberseite einen nasenartigen Vorsprung 54 auf, der in einer sich in Fahrzeuglängsrichtung erstreckenden, hier nicht näher dargestellten Nut an der Innenseite des betreffenden Gehäuseabschnitts 41A bzw. 41B geführt ist und so eine Drehmomentabstützung für den Kopplungslenker 44 bildet.

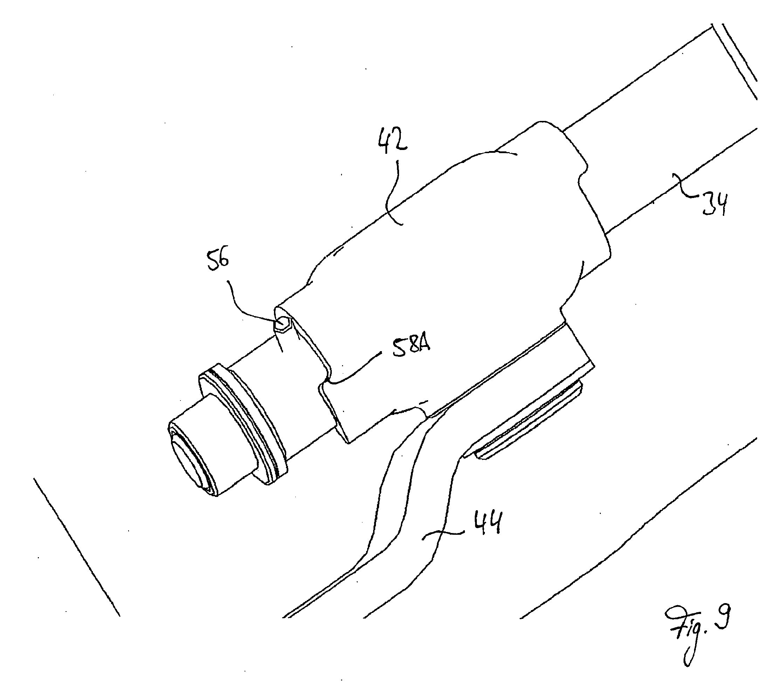

Des Weiteren weist die Gewindespindel 34 jeweils in ihren Endabschnitten einen insbesondere in Fig. 9 dargestellten Endanschlag 56 auf, der in Form eines im Wesentlichen zylindrischen Stifts ausgebildet ist und mit einer Stufung 58A an einer Stirnfläche der Spindelmutter 42 zusammenwirkt. An der der Stufung 58A abgewandten Stirnseite weist die Spindelmutter 42 eine weitere Stufung 58B auf, die mit einem entsprechend dem Endanschlag 56 ausgebildeten, hier nicht näher dargestellten Endanschlag am anderen Ende der Gewindespindel 34 angeordnet ist. Im Bereich dieses Endes ist auch das Schneckenrad 32 zum Antrieb der Gewindespindel 34 angeordnet.

Des Weiteren weisen die Viergelenklenkereinheiten 22A und 22B jeweils einen Gummiring 60 und einen Gummipuffer 62 auf, die, wie Fig. 8 zu entnehmen ist, in Ruhestellung des Spoilerelements 12 an der Scharnierkonsole 48 verspannt sind und somit ein Klappern der Luftleiteinrichtung in deren eingefahrenen Zustand verhindern.

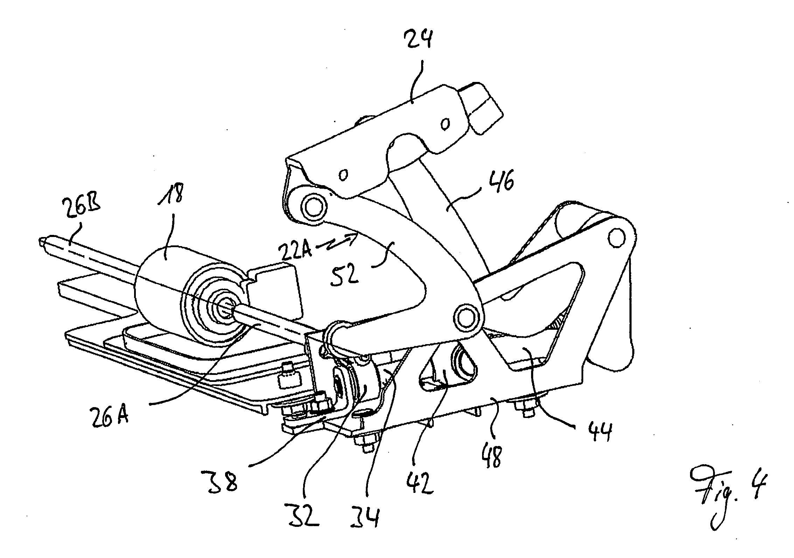

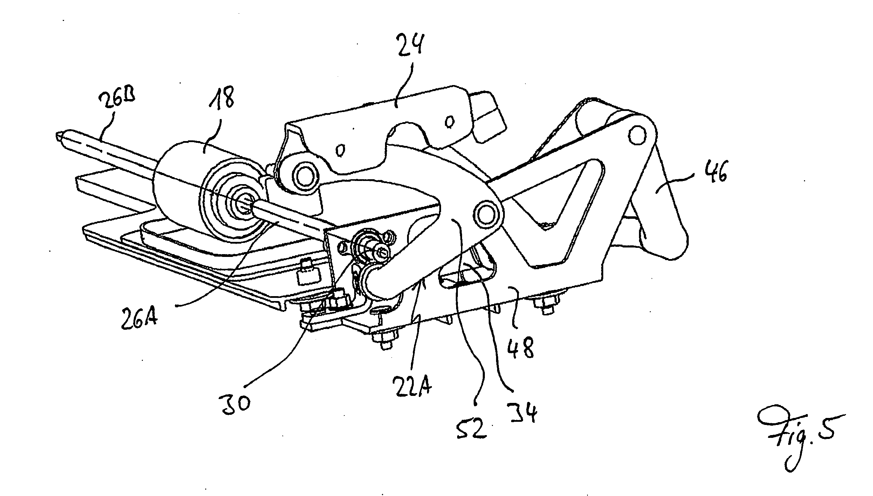

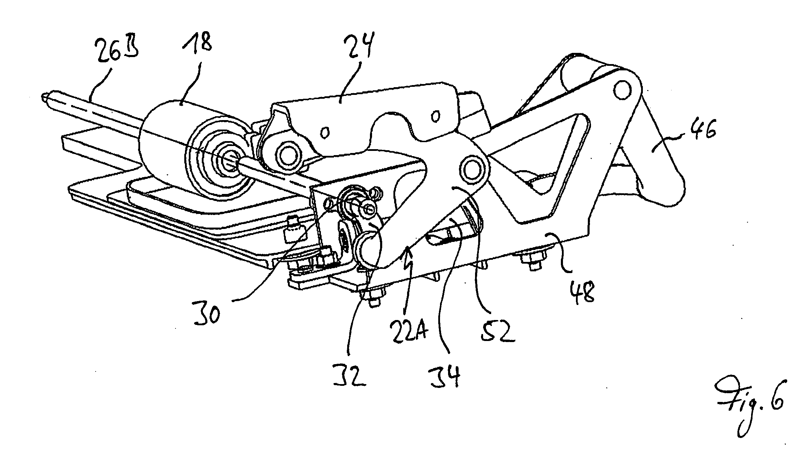

Die Steigung des Gewindes der Gewindespindel 34, die drehbar in der Scharnierkonsole 48 gelagert ist, ist so klein gewählt, dass die Verbindung mit der Spindelmutter 42 bereits selbsthemmend ist. Der aus der Schneckenwelle 30 und dem Schneckenrad 32 gebildete Schneckentrieb zum Antrieb der Gewindespindel 34 erhöht die Selbsthemmung nochmals. Somit ist gewährleistet, dass jede gewählte Ausstellposition des Spoilerelements 12 auch im Fahrbetrieb gehalten wird. Beispielhaft ist in Fig. 3 die Stellung des Stellantriebs für ein vollständig ausgestelltes Spoilerelement 12, in den Figuren 4 und 5 für zwei Zwischenpositionen des Spoilerelements 12 und in Fig. 6 für die Ruhestellung des Spoilerelements 12 dargestellt.

Um beliebige Positionen des Spoilerelements 12 anfahren zu können ist der Antriebsmotor 18 des Weiteren mit einer nicht näher dargestellten Hallsensorik versehen, die eine exakte Abfrage des Motorstatus ermöglicht.

Der Stellantrieb 14 der Luftleiteinrichtung 10 weist keine Stirnräder im Antriebsstrang auf, so dass Zahneingriffsgeräusche vermieden werden können. Der aus der Schneckenwelle 30 und dem Schneckenrad 32 gebildete Schneckentrieb lenkt einerseits die von dem Antriebsmotor 18 auf die Antriebswelle 26A bzw. 26B ausgeübte Kraft um 90° um. Andererseits dient der Schneckentrieb zur Anpassung von Drehmoment und Drehzahl des Antriebsmotors 18 an die im jeweiligen Anwendungsfall geforderte Ausstellzeit und die zum Ausstellen des Spoilerelements 12 erforderliche Kraft.

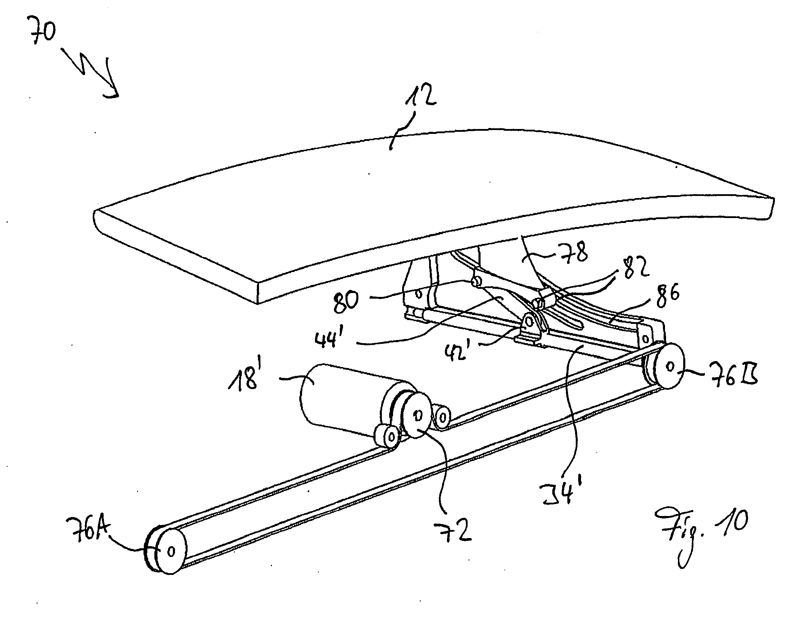

In Figur 10 ist eine weitere Ausführungsform einer Luftleiteinrichtung 70 dargestellt, die entsprechend der Luftleiteinrichtung nach den Figuren 1 bis 9 im Heckbereich eines Kraftfahrzeugs angeordnet werden kann und mit einem Spoilerelement 12 versehen ist.

Die Luftleiteinrichtung 70 weist einen Antriebsmotor 18' auf, dessen Antriebswelle sich in Fahrzeuglängsrichtung erstreckt, auf der eine Riemenscheibe 72 sitzt, die einen Riemen 74 antreibt, der wiederum über zwei weitere Riemenscheiben 76A und 76B läuft.

Die Riemenscheiben 76A und 76B treiben jeweils eine drehbar gelagerte Gewindespindel 34' an, von denen in Fig. 10 nur die der Riemenscheibe 76B zugeordnete dargestellt ist.

Auf der Gewindespindel 34' sitzt jeweils eine Spindelmutter 42', die bei einer Drehung der Gewindespindel 34' einen axialen Versatz erfährt. An der Spindelmutter 42' ist ein Kopplungslenker 44' angelenkt, der mit seinem der Spindelmutter 42' abgewandten Ende an einem Träger 78 des Spoilerelements 12 angelenkt ist.

Der Träger 78 des Spoilerelements 12 weist zwei Paare von in Fahrzeugquerrichtung abstehenden Zapfen 80 und 82 auf, die jeweils in Kulissenbahnen 84 bzw. 86 geführt sind. Ein Versatz der Spindelmutter 42' auf der Gewindespindel 34' führt durch das erfolgende Verschieben des Trägers 78 entlang der Kulissenbahnen 84 und 86 zu einem Verstellen des Spoilerelements 12. Der Träger 78 mit den Zapfen 80, 82 und die Kulissenbahnen bilden eine Ausstellsteuereinrichtung, die die Bewegungsbahn des Spoilerelements 12 bei einer Betätigung des Antriebsmotors 18' vorgibt.

### Bezugszeichen

- 10: Luftleiteinrichtung
- 12: Spoilerelement
- 14: Stellantrieb
- 16: Basisplatte
- 18, 18': Antriebsmotor
- 20: Motorgehäuse
- 22A,B: Viergelenklenkereinheit
- 24: Träger
- 26A, B: Antriebswelle
- 28: Seitenwand
- 30: Schneckenwelle
- 32: Schneckenrad
- 34, 34': Gewindespindel
- 36: Lagerlasche
- 38: Lagerlasche
- 40: Grundplatte
- 41A,B: Gehäuseabschnitt
- 42,42': Spindelmutter
- 44, 44': Kopplungslenker
- 46: hinterer Lenker
- 48: Scharnierkonsole
- 50: Kopplungsarm
- 52: vorderer Lenker
- 54: Vorsprung
- 56: Endanschlag
- 58A, B: Stufung
- 60: Gummiring
- 62: Gummipuffer
- 70: Luftleiteinrichtung
- 72: Riemenscheibe
- 74: Riemen
- 76A,B: Riemenscheibe
- 78: Träger
- 80: Zapfen
- 82: Zapfen
- 84: Kulissenbahn
- 86: Kulissenbahn

## Patentansprüche

1. Luftleiteinrichtung für ein Fahrzeug, umfassend mindestens ein verstellbares Spoilerelement (12) und einen Stellantrieb (14), der mit mindestens einem Antriebsmotor (18) versehen ist und der mindestens eine axial fixierte, drehbar gelagerte und mittels des Antriebsmotors (18) angetriebene Gewindespindel (34, 34') umfasst, auf der eine Spindelmutter (42, 42') sitzt, an der ein Kopplungslenker (44, 44') schwenkbar angelenkt ist, **dadurch gekennzeichnet, dass** der Kopplungslenker (44, 44') an seinem der Spindelmutter (42, 42') abgewandten Ende schwenkbar mit einer Ausstellsteuereinrichtung verbunden ist, die eine Bewegungsbahn des Spoilerelements (12) bei dessen Verstellen vorgibt.

2. Luftleiteinrichtung nach Anspruch 1, **dadurch gekennzeichnet, dass** die Ausstellsteuereinrichtung eine Mehrgelenklenkereinheit, vorzugsweise eine Viergelenklenkereinheit (22A, 22B) umfasst.

3. Luftleiteinrichtung nach Anspruch 1, **dadurch gekennzeichnet, dass** die Ausstellsteuereinrichtung einen mittels mindestens einer Kulissenbahn (84, 86) geführten Träger (78) für das Spoilerelement (12) umfasst.

4. Luftleiteinrichtung nach einem der Ansprüche 1 bis 3, **dadurch gekennzeichnet, dass** die Gewindespindel (34) über einen Schneckentrieb (30, 32) mit einer Antriebswelle (26A, 26B) des Antriebsmotors (18) verbunden ist.

5. Luftleiteinrichtung nach einem der Ansprüche 1 bis 3, **dadurch gekennzeichnet, dass** die Gewindespindel (34') über einen Antriebsriemen (74) mit dem Antriebsmotor (18) verbunden ist.

6. Luftleiteinrichtung nach einem der Ansprüche 1 bis 5, **dadurch gekennzeichnet, dass** die Spindelmutter (42) mit einer Drehmomentabstützung versehen ist, die vorzugsweise einen Vorsprung (54) umfasst, der in einer karosseriefesten Nut geführt ist.

7. Luftleiteinrichtung nach einem der Ansprüche 1 bis 6, **dadurch gekennzeichnet, dass** die Gewindespindel (34) mindestens einen Endanschlag (56) für die Spindelmutter (42) umfasst, der aus einem bezüglich der Spindelachse radial abstehenden Stift gebildet ist, der mit einer Stufung (58A, 58B) an einer Stirnfläche der Spindelmutter zusammenwirkt.

8. Luftleiteinrichtung nach einem der Ansprüche 1 bis 7, **dadurch gekennzeichnet, dass** die Antriebswelle (26A, 26B) eine flexible Welle ist.

9. Luftleiteinrichtung nach einem der Ansprüche 1 bis 8, **dadurch gekennzeichnet, dass** der Antriebsmotor (18) mit einer Hallsensorik versehen ist.

## Claims

1. Air guiding device for a vehicle, comprising at least one adjustable spoiler element (12) and an actuating drive (14) which is provided with at least one drive motor (18) and which comprises at least one axially fixed, rotatably mounted threaded spindle (34, 34') which is driven by means of the drive motor (18) and on which is seated a spindle nut (42, 42') on which a coupling link (44, 44') is articulated pivotably, **characterized in that** the coupling link (44, 44') is pivotably connected, at its end facing away from the spindle nut (42, 42'), to a set-out control device which stipulates a pattern movement of the spoiler element (12) during the adjustment of the latter.

2. Air guiding device according to Claim 1, **characterized in that** the set-out control device comprises a multiple-joint link unit, preferably a four-joint link unit (22A, 22B).

3. Air guiding device according to Claim 1, **characterized in that** the set-out control device comprises for the spoiler element (12) a carrier (78) guided by means of at least one slide track (84, 86).

4. Air guiding device according to one of Claims 1 to 3, **characterized in that** the threaded spindle (34) is connected to a drive shaft (26A, 26B) of the drive motor (18) via a worm mechanism (30, 32).

5. Air guiding device according to one of Claims 1 to 3, **characterized in that** the threaded spindle (34') is connected to the drive motor (18) via a drive belt (74).

6. Air guiding device according to one of Claims 1 to 5, **characterized in that** the spindle nut (42) is provided with a torque support which preferably comprises a projection (54) guided in a groove fixed with respect to the vehicle body.

7. Air guiding device according to one of Claims 1 to 6, **characterized in that** the threaded spindle (34) comprises for the spindle nut (42) at least one limit stop (56) which is formed from a pin which projects radially with respect to the spindle axis and which cooperates with a step (58A, 58B) on one end face of the spindle nut.

8. Air guiding device according to one of Claims 1 to 7, **characterized in that** the drive shaft (26A, 26B) is a flexible shaft.

9. Air guiding device according to one of Claims 1 to 8, **characterized in that** the drive motor (18) is provided with Hall sensor technology.

## Revendications

1. Dispositif de guidage d'air pour un véhicule, comprenant au moins un élément déflecteur réglable (12) et un entraînement de commande (14), qui est pourvu d'au moins un moteur d'entraînement (18) et qui comprend au moins une broche filetée (34, 34') fixée axialement, montée à rotation et entraînée au moyen du moteur d'entraînement (18), sur laquelle repose un écrou de broche (42, 42'), auquel est articulé, de manière pivotante, un bras oscillant d'accouplement (44, 44'), **caractérisé en ce que** le bras oscillant d'accouplement (44, 44') est connecté à son extrémité opposée à l'écrou de broche (42, 42') de manière pivotante à un dispositif de commande de sortie, qui prédéfinit une voie de déplacement de l'élément déflecteur (12) lors de son réglage.

2. Dispositif de guidage d'air selon la revendication 1, **caractérisé en ce que** le dispositif de commande de sortie comprend une unité de bras oscillant à articulation multiple, de préférence une unité de bras oscillant à quatre articulations (22A, 22B).

3. Dispositif de guidage d'air selon la revendication 1, **caractérisé en ce que** le dispositif de commande de sortie comprend un support (78) pour l'élément déflecteur (12) guidé au moyen d'au moins une piste à coulisse (84, 86).

4. Dispositif de guidage d'air selon l'une quelconque des revendications 1 à 3, **caractérisé en ce que** la broche filetée (34) est connectée par le biais d'une commande à vis sans fin (30, 32) à un arbre d'entraînement (26A, 26B) du moteur d'entraînement (18).

5. Dispositif de guidage d'air selon l'une quelconque des revendications 1 à 3, **caractérisé en ce que** la broche filetée (34') est connectée par le biais d'une courroie d'entraînement (74) au moteur d'entraînement (18).

6. Dispositif de guidage d'air selon l'une quelconque des revendications 1 à 5, **caractérisé en ce que** l'écrou de broche (42) est pourvu d'un support de couple qui comprend de préférence une saillie (54) qui est guidée dans une rainure fixée à la carrosserie.

7. Dispositif de guidage d'air selon l'une quelconque des revendications 1 à 6, **caractérisé en ce que** la broche filetée (34) comprend au moins une butée de fin de course (56) pour l'écrou de broche (42), laquelle est formée d'une goupille saillant radialement par rapport à l'axe de la broche, qui coopère avec un gradin (58A, 58B) sur une face frontale de l'écrou de broche.

8. Dispositif de guidage d'air selon l'une quelconque des revendications 1 à 7, **caractérisé en ce que** l'arbre d'entraînement (26A, 26B) est un arbre flexible.

9. Dispositif de guidage d'air selon l'une quelconque des revendications 1 à 8, **caractérisé en ce que** le moteur d'entraînement (18) est pourvu d'un système de capteur de Hall.
